# EUROPEAN PATENT SPECIFICATION

(11) **EP 4 290 598 B1**
(45) Date of publication and mention of the grant of the patent: **11.03.2026**
(21) Application number: 22904419.3
(22) Date of filing: 06.10.2022
(51) Int. Cl.: H01M 4/04, H01M 4/139, B30B 3/00, B30B 3/04, B30B 11/16

(54) **ELECTRODE MANUFACTURING DEVICE**
VORRICHTUNG ZUR HERSTELLUNG EINER ELEKTRODE
APPAREIL DE FABRICATION D'ÉLECTRODE

(30) Priority: 06.12.2021 KR 20210172789
(43) Date of publication of application: 13.12.2023
(73) Proprietor: LG ENERGY SOLUTION, LTD., Seoul 07335 (KR)
(72) Inventor: SONG, Won Seob, Daejeon 34122 (KR); KIM, Hwan Han, Daejeon 34122 (KR); CHOY, Sang Hoon, Daejeon 34122 (KR); SEOL, Jeong Soo, Daejeon 34122 (KR); LEE, Bumhyuk, Daejeon 34122 (KR)
(74) Representative: Plasseraud IP
(86) International application number: PCT/KR2022/015047
(87) International publication number: WO 2023/106585

(56) References cited:
- CN-U- 203 410 045
- JP-A- 2000 251 942
- JP-A- 2013 165 036
- JP-A- 2018 156 839
- KR-A- 20100 120 239
- KR-A- 20180 081 310
- KR-A- 20180 081 310
- US-A1- 2018 226 630
- US-A1- 2019 131 614

## Description

### [TECHNICAL FIELD]

The present disclosure relates to an electrode manufacturing device, and more particularly, to an electrode manufacturing device that can mitigate generation of wrinkles and prevent generation of folds on the non-coating part of the electrode.

### [BACKGROUND]

With the technology development and increased demand for mobile devices, demand for secondary batteries as energy sources have been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In small mobile devices, one, or two, or three battery cells are used per device, while middle or large-sized devices such as vehicles require high power and large capacity. Therefore, a middle or large-sized battery module having a plurality of battery cells electrically connected to one another is used.

Since middle or large-sized battery modules are preferably manufactured with as small a size and weight as possible, a prismatic battery, a pouch-type battery, or the like, which can be stacked with high integration and has a small weight relative to capacity, is mainly used as a battery cell of the middle or large-sized battery modules. Meanwhile, the battery module may include a module frame which is opened in its front and rear surfaces and houses the battery cell stack in the internal space, in order to protect the battery cell stack from external impact, heat or vibration.

CN 203 410 045 U discloses an electrode manufacturing device configured to apply pressure to an electrode containing: a coating part and a non-coating part, the electrode manufacturing device comprising: a first pressure roll that is configured to apply pressure to the non-coating part; a second pressure roll that is configured to apply pressure to the coating part; the first pressure roll being located on an extremity of the second pressure roll, wherein a difference between a radius of the first pressure roll and a radius of the second pressure roll is configured to be equal to or smaller than a step difference between the coating part and the non-coating part of the electrode.

### [DETAILED DESCRIPTION OF THE INVENTION]

### [Technical Problem]

It is an object of the present disclosure to provide an electrode manufacturing device that can mitigate generation of wrinkles and prevent generation of folds on the non-coating part of the electrode.

### [Technical Solution]

The invention is as defined by the appended claims.

According to the present invention, there is provided a method for applying pressure to an electrode (100) using an electrode manufacturing device (1000), wherein the electrode (100) contains a coating part (150) and a non-coating part (110), and the electrode manufacturing device (1000) comprises:
a first pressure roll (1100);
a second pressure roll (1200);
the first pressure roll (1100) being located on an extremity of the second pressure roll (1200), and
a connection part (1500) that penetrates through the center of the first pressure roll (1100) and the center of the second pressure roll (1200), respectively,
wherein a difference **d1** between a radius of the first pressure roll (1100) and a radius of the second pressure roll (1200) is equal to or smaller than a step difference d2 between the coating part (150) and the non-coating part (110),
wherein the end of the coating part (150) includes a first sliding part (150s) whose thickness decreases in a direction toward the non-coating part (110), and
the first pressure roll (1100) includes a second sliding part (1100s) in contact with the first sliding part (150s),
wherein the first pressure roll (1100) applies pressure to the non-coating part (110) and the second pressure roll (1200) applies pressure to the coating part (150).

The difference between a radius of the first pressure roll and a radius of the second pressure roll may be more than 50 µm and less than 2000 µm.

The first pressure roll may extend along an end of the coating part, and the first pressure roll may apply pressure to ends of the non-coating part and the coating part.

The end of the coating part includes a first sliding part whose thickness decreases in a direction toward the non-coating part, and the first pressure roll may include a second sliding part in contact with the first sliding part.

A thickness of the second sliding part may be equal to or smaller than a thickness of the first sliding part.

A thickness of the second sliding part may be equal to or smaller than a thickness of the first sliding part.

The thickness of the second sliding part may be more than 50 µm and less than 2000 µm.

The first pressure roll and the second pressure roll may be in contact with each other.

A surface in contact with the second pressure roll among the outer surfaces of the first pressure roll and a surface in contact with the first pressure roll among the outer surfaces of the second pressure roll may be respectively coated.

The entire outer surface of the first pressure roll and the entire outer surface of the second pressure roll may be respectively coated.

The electrode manufacturing device may further comprise at least one fixing part that penetrates through each of the first pressure roll and the second pressure roll, wherein the fixing part may be spaced apart from the connection part.

The first pressure roll and the second pressure roll may be each composed of at least one material selected from the group consisting of metal, plastic, rubber, and silicon.

According to the present invention, there is further provided an electrode manufacturing device that applies pressure to an electrode containing a coating part and a non-coating part, the electrode manufacturing device comprising: a first pressure roll that applies pressure to the non-coating part; a second pressure roll that applies pressure to the coating part; and a connection part that penetrates through the center of the first pressure roll and the center of the second pressure roll, respectively, wherein a difference between a radius of the first pressure roll and a radius of the second pressure roll is equal to or smaller than a step difference between the coating part and the non-coating part.

The difference between a radius of the first pressure roll and a radius of the second pressure roll is more than 300 µm and less than 500 µm.

According to another embodiment of the present disclosure, there is provided an electrode manufactured by the above-mentioned electrode manufacturing device.

### [Advantageous Effects]

According to embodiments of the present disclosure, provided is an electrode manufacturing device comprising a first pressure roll and a second pressure roll, wherein a difference between a radius of the first pressure roll and a radius of the second pressure roll is equal to or smaller than a step difference between the coating part and the non-coating part, thereby capable of mitigating generation of wrinkles and preventing generation of folds on the non-coating part of the electrode.

The advantage effects of the present disclosure are not limited to the effects mentioned above, and additional other effects which are not mentioned herein should be clearly understood by those skilled in the art from the following detailed description and the accompanying drawings.

### [BRIEF DESCRIPTION OF THE DRAWINGS]

Fig. 1 is a cross-sectional view of an electrode manufacturing device and an electrode manufactured therefrom according to an embodiment of the present disclosure;
Fig. 2 is a diagram showing a cross section of the electrode manufacturing device of Fig. 1;
Fig. 3 is a diagram showing an electrode manufactured from the electrode manufacturing device of Fig. 1;
Fig. 4 is a cross-sectional view showing a state in which each component of the electrode manufacturing device of Fig. 2 is disassembled;
Fig. 5 is an enlarged view of a non-coating part when the electrode of Fig. 2 is a negative electrode;
Fig. 6 is an enlarged view of a non-coating part when the electrode of Fig. 2 is a positive electrode; and
Fig. 7 is a graph showing a camber level and a tab detachment level that appear according to the level of the step difference between a coating part and a non-coating part of an electrode.

### [DETAILED DESCRIPTION OF THE EMBODIMENTS]

Hereinafter, various embodiments of the present disclosure will be described in detail with reference to the accompanying drawings so that those skilled in the art can easily carry out them.

The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Now, an electrode manufacturing device according to an embodiment of the present disclosure will be described.

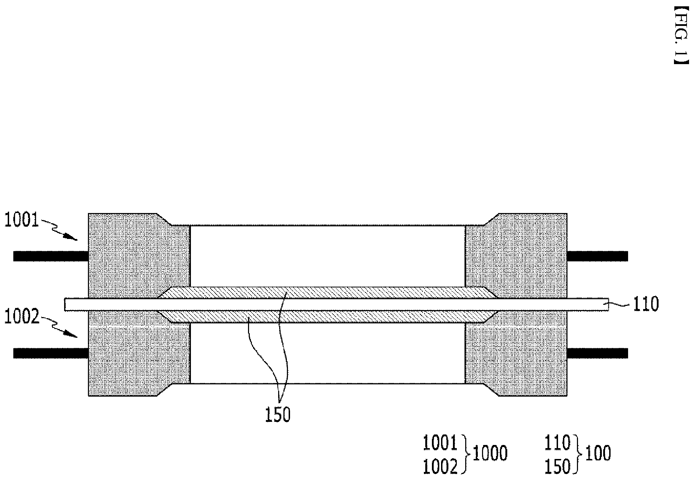

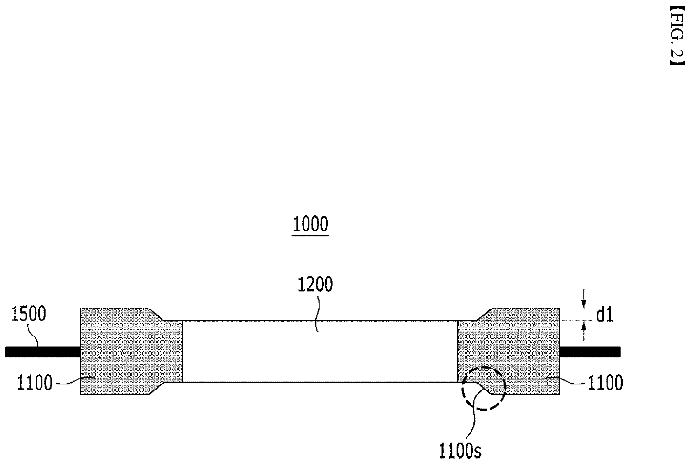

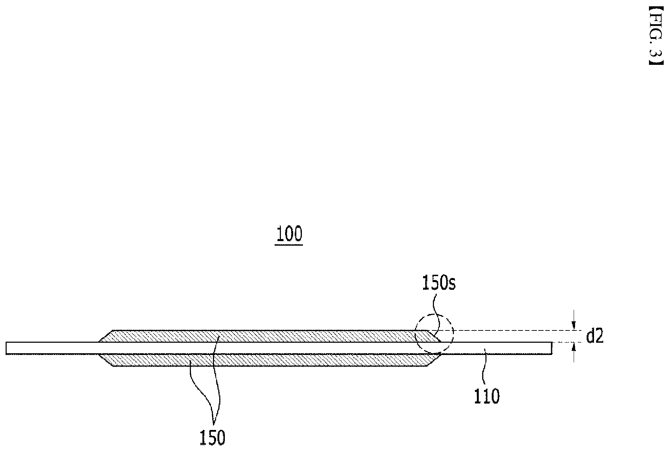

Fig. 1 is a cross-sectional view of an electrode manufacturing device and an electrode manufactured therefrom according to an embodiment of the present disclosure. Fig. 2 is a diagram showing a cross section of the electrode manufacturing device of Fig. 1. Fig. 3 is a diagram showing an electrode manufactured from the electrode manufacturing device of Fig. 1.

Referring to Fig. 1, an electrode manufacturing device 1000 according to an embodiment of the present disclosure is an electrode manufacturing device 1000 that applies pressure to an electrode containing a coating part 150 and a non-coating part 110, the electrode manufacturing device comprising: a first pressure roll 1100 that applies pressure to the non-coating part 110; a second pressure roll 1200 that applies pressure to the coating part 150; and a connection part 1500 that penetrates through the center of the first pressure roll 1100 and the center of the second pressure roll 1200, respectively.

Referring to Figs. 1 and 3, the electrode 100 may include a coating part 150 and a non-coating part 110. More specifically, in the electrode 100, the coating part 150 may refer to a portion where an active material layer is formed on the current collector of the electrode. Also, in the electrode 100, the non-coating part 110 may refer to a portion where an active material layer is not formed on the current collector of the electrode.

In one example, when the electrode 100 is a positive electrode, the coating part 150 may refer to a portion where a positive electrode active material layer is formed on a positive electrode current collector, and the non-coating part 110 may refer to a portion where a positive electrode active material layer is not formed on a positive electrode current collector.

In another example, when the electrode 100 is a negative electrode, the coating part 150 may refer to a portion in which a negative electrode active material layer is formed on a negative electrode current collector, and the non-coating part 110 may refer to a portion where a negative electrode active material layer is not formed on a negative electrode current collector.

Further, in the electrode 100, the coating part 150 may be a portion where an active material layer is formed on the upper and lower surfaces of the electrode current collector, respectively, as shown in Figs. 1 and 3. However, the present disclosure is not limited thereto, and the coating part 150 may be a portion where an active material layer is formed on one of the upper and lower surfaces of the current collector, unlike Figs. 1 and 3.

Referring to Figs. 1 and 2, the electrode manufacturing device 1000 may include a first electrode manufacturing device 1001 and a second electrode manufacturing device 1002. Here, the first electrode manufacturing device 1001 may be located in an upper part based on the electrode 100, and the second electrode manufacturing device 1002 may be located in a lower part based on the electrode 100. In this case, the coating part 150 of the electrode 100 may be a portion where active material layers are formed on the upper and lower surfaces of the current collector, respectively, as shown in Figs. 1 and 3.

However, the present disclosure is not limited thereto, and in the electrode manufacturing device 1000, one of the first electrode manufacturing device 1001 and the second electrode manufacturing device 1002 is omitted, so that an electrode current collector can be located on one electrode manufacturing device and the electrode current collector can be pressed. At this time, the electrode manufacturing device can press the electrode current collector in the form of a guide roll rather than pressing the electrode current collector from both sides.

In one example, when the coating part 150 of the electrode 100 is a portion where an active material layer is formed on one of the upper and lower surfaces of the electrode current collector, in the electrode manufacturing device 1000, one of the first electrode manufacturing device 1001 and the second electrode manufacturing device 1002 may be omitted.

Next, the electrode manufacturing device 1000 will be mainly described, and both the first electrode manufacturing device 1001 and the second electrode manufacturing device 1002 can be similarly described.

Referring to Figs. 1 and 2, the electrode manufacturing device 1000 includes a first pressure roll 1100 and a second pressure roll 1200. Here, the first pressure roll 1100 may be located on both sides of the second pressure roll 1200, respectively, as shown in Figs. 1 and 2. However, the present disclosure is not limited thereto, and the first pressure roll 1100 may be located on only one side of both sides of the second pressure roll 1200, unlike Figs. 1 and 2.

Further, the first pressure roll 1100 and the second pressure roll 1200 may each have one ring shape as shown in Figs. 1 and 2. However, the present disclosure is not limited thereto, and the first pressure roll 1100 and the second pressure roll 1200 may each have a shape in which a plurality of rings are coupled, unlike Figs. 1 and 2.

Thereby, the electrode manufacturing device 1000 according to the present embodiment couples the first pressure roll 1100 and the second pressure roll 1200 according to the shape of the electrode 100 (e.g., the position of the non-coating part), which is thus advantageous in that it can be applied flexibly to changes in the shape of the electrode 100.

Referring to Figs, 1 to 3, the difference d1 between the radius of the first pressure roll 1100 and the radius of the second pressure roll 1200 can be equal to or smaller than a step difference d2 between the coating part 150 and the non-coating part 110. More specifically, based on the respective centers of the first pressure roll 1100 and the second pressure roll 1200, the difference d1 between the distance between the center of the first pressure roll 1100 and the pressure surface of the first pressure roll 1100 and the distance between the center of the second pressure roll 1200 and the pressure surface of the second pressure roll 1200 may be equal to or smaller than the step difference d2 between the coating part 150 and the non-coating part 110.

Further, the difference d1 between the radius of the first pressure roll 1100 and the radius of the second pressure roll 1200 may be more than 50 µm to less than 2000 µm. More specifically, the difference d1 between the radius of the first pressure roll 1100 and the radius of the second pressure roll 1200 may be 100 µm or more and 1000 µm or less. In one example, the difference d1 between the radius of the first pressure roll 1100 and the radius of the second pressure roll 1200 may be 300 µm or more and 500 µm or less.

Thereby, in the electrode manufacturing device 1000 according to the present embodiment, the difference d1 between the radius of the first pressure roll 1100 and the radius of the second pressure roll 1200 is included within the above range, whereby as the electrode manufacturing device 1000 presses the upper and/or lower parts of the electrode 100, it is possible to mitigate generation of wrinkles of the non-coating part 110 while increasing the stretching of the non-coating part 110, and also preventing generation of folds on the non-coating part 110.

Unlike the same, in the electrode manufacturing device 1000 according to the present embodiment, when the difference d1 between the radius of the first pressure roll 1100 and the radius of the second pressure roll 1200 is 50 µm or less, there may be a problem that the degree of stretching of the non-coating part 110 is insufficient, and the non-coating part 110 is folded or wrinkles deepen. Further, in the electrode manufacturing device 1000 according to the present embodiment, when the difference d1 between the radius of the first pressure roll 1100 and the radius of the second pressure roll 1200 is 2000um or more, there is a problem that the non-coating part 110 is excessively stretched or wrinkles such as swells deepen.

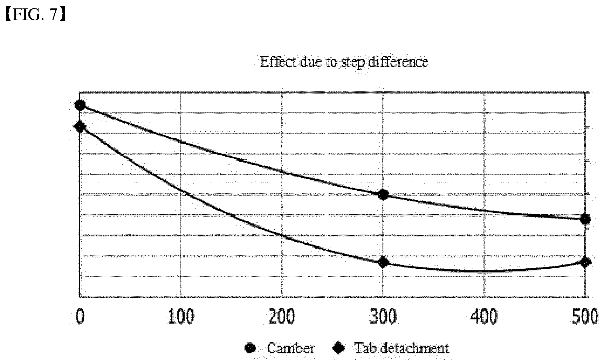

Specifically, referring to Fig. 7, when the difference d1 between the radius of the first pressure roll 1100 and the radius of the second pressure roll 1200 is 300um or more and 500um or less, the camber value and the detachment value of the non-coating part have a low range, thereby capable of improving the effect of removing wrinkles or preventing generation of folds. Here, the camber value is for measuring the bending level of the electrode, and the detachment value of the non-coating part is for measuring the level of detaching the non-coating part in a direction perpendicular to the coating surface.

Further, referring to Figs. 1 and 2, the first pressure roll 1100 extends along the end of the coating part 150, and the first pressure roll 1100 may apply pressure to the ends of the non-coating part 110 and the coating part 150.

More specifically, referring to Figs. 1 and 3, in the electrode 100, the end of the coating part 150 may include a first sliding part 150s whose thickness decreases in a direction toward the non-coating part 110. Here, the first sliding part 150s may be formed as the active material slurry constituting the active material layer flows in a direction toward the non-coating part 110 when forming the active material layer on the electrode current collector.

Referring to Figures 1 and 2, the first pressure roll 1100 may include a second sliding part 1100s in contact with the first sliding part 150s of the coating part 150. Here, the second sliding part 1100s may extend along the first sliding part 150s.

Thereby, in the electrode manufacturing device 1000 according to the present embodiment, the first pressure roll 1100 includes a second sliding part 1100s corresponding to the first sliding part 150s of the coating part 150, which is thus advantageous in that pressure can be uniformly applied to the coating part 150 and the first sliding part 150s.

Further, the thickness of the second sliding part 1100s may be equal to or smaller than the thickness of the first sliding part 150s. That is, the thickness of the second sliding part 1100s may be more than 50 µm and less than 2000 µm.

More specifically, the thickness of the second sliding part 1100s may be 100 µm or more and 1000 µm or less. In one example, the thickness of the second sliding part 1100s may be 300 µm or more and 500 µm or less.

Here, the thickness of the second sliding part 1100s can be described similarly to the difference d1 between the radius of the first pressure roll 1100 and the radius of the second pressure roll 1200.

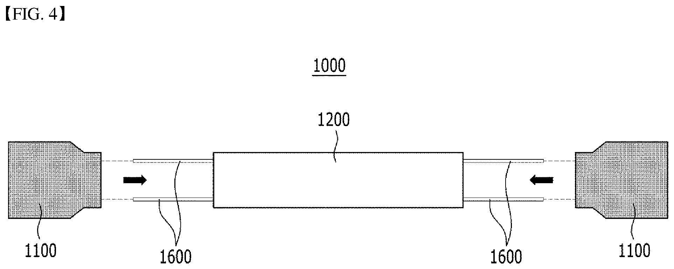

Fig. 4 is a cross-sectional view showing a state in which each component of the electrode manufacturing device of Fig. 2 is disassembled.

Referring to Figs. 1, 2 and 4, the first pressure roll 1100 and the second pressure roll 1200 may be coupled to each other through the connection part 1500. Here, the first pressure roll 1100 and the second pressure roll 1200 may be in contact with each other.

Thereby, in the electrode manufacturing device 1000 according to the present embodiment, the first pressure roll 1100 and the second pressure roll 1200 can be stably fixed to each other.

Further, referring to Figs. 2 and 4, the electrode manufacturing device 1000 according to the present embodiment may further comprise at least one fixing part 1600 penetrating through the first pressure roll 1100 and the second pressure roll 1200. Here, the fixing part 1600 may be spaced apart from the connection part 1500.

In one example, the fixing part 1600 can be made of a member such as a fixing pin. However, the fixing part can be included in the present disclosure without limitation as long as it is a member that fixes the first pressure roll 1100 and the second pressure roll 1200 to each other while penetrating the first pressure roll 1100 and the second pressure roll 1200. In a modified embodiment, the fixing part 1600 may also be manufactured in the form of an integral roll without a member such as a fixing pin.

Thereby, in the electrode manufacturing device 1000 according to the present embodiment, the first pressure roll 1100 and the second pressure roll 1200 can be more stably fixed while minimizing friction generated between the first pressure roll 1100 and the second pressure roll 1200.

Here, a surface in contact with the second pressure roll 1200 among the outer surfaces of the first pressure roll 1100 and a surface in contact with the first pressure roll 1100 among the outer surfaces of the second pressure roll 1200 may be respectively coated. In addition, the entire outer surface of the first pressure roll 1100 and the entire outer surface of the second pressure roll 1200 may be respectively coated.

In one example, some of the outer surfaces of the first pressure roll 1100 and the second pressure roll 1200 are coated by at least one coating method of an anodizing coating, a DLC (diamond-like carbon) coating, a hard chromium plating, a silicon coating and a rubber coating. The method can be included in the present embodiment without limitation as long as it is a coating method capable of preventing generation of damages and foreign matters due to friction between the first pressure roll 1100 and the second pressure roll 1200.

Thereby, in the electrode manufacturing device 1000 according to the present embodiment, some of the outer surfaces of the first pressure roll 1100 and the second pressure roll 1200 are coated by the above-described method, thereby capable of minimizing friction generated between the first pressure roll 1100 and the second pressure roll 1200, and preventing generation of damages and foreign matters due to the first pressure roll 1100 and the second pressure roll 1200.

Further, the outer surfaces of the first pressure roll 1100 and the second pressure roll 1200 may each have a shape considering the position of the non-coating part 110 and the loading amount or pattern of the coating part 150. In one example, the outer surfaces of the first pressure roll 1100 and the second pressure roll 1200 may be made in the shape of one of crown, taper, trapezoid, step, recrown, and half-crown, respectively. The outer surfaces of the first pressure roll 1100 and the second pressure roll 1200 may be formed in a combination of different shapes. However, the present disclosure is not limited thereto, and any shape capable of pressing the electrode 100 can be included in the present embodiment.

Thereby, in the electrode manufacturing device 1000 of the present embodiment, the first pressure roll 1100 and the second pressure roll 1200 can have different shapes depending on the position of the non-coating part 110 and the loading amount or pattern of the coating part 150, so that the degree of pressure and friction applied to the non-coating part 110 can be appropriately adjusted according to the shape of the electrode 100.

Further, the first pressure roll 1100 and the second pressure roll 1200 may be made of a material that has considered the position of the non-coating part 110 and the loading amount or pattern of the coating part 150, respectively. In one example, the first pressure roll 1100 and the second pressure roll 1200 may each be made of at least one material selected from the group consisting of metal, plastic, rubber, and silicon. In addition, the rubber may be nitrile rubber (HNBR), hydrogenated nitrile rubber (HNBR), and the like, and the silicone may be RTV silicone (room-temperature-vulcanizing silicone). However, the rubber can be included in the present embodiment without limitation as long as it is a material capable of pressing the electrode 100.

Thereby, in the electrode manufacturing device 1000 of the present embodiment, the first pressure roll 1100 and the second pressure roll 1200 may have different materials depending on the position of the non-coating part 110 and the loading amount or pattern of the coating part 150, so that the degree of pressure and friction applied to the non-coating part 110 can be appropriately adjusted according to the shape of the electrode 100.

An electrode according to another embodiment of the present disclosure can be manufactured by the electrode manufacturing device as described above. In addition, a plurality of electrodes may be stacked to form an electrode stack, wherein the electrode stack may be mounted in a battery case.

Hereinafter, the contents of the present disclosure will be described with reference to more specific examples. The following examples are for illustrative purpose only and the scope of the present disclosure is not limited thereby.

### <Comparative Example 1>

An electrode manufacturing device in which a difference d1 between the radius of the first pressure roll 1100 and the radius of the second pressure roll 1200 was 50 µm was manufactured.

### <Example 1>

An electrode manufacturing device in which a difference d1 between the radius of the first pressure roll 1100 and the radius of the second pressure roll 1200 was 400 µm was manufactured.

### <Comparative Example 2>

An electrode manufacturing device in which the difference d1 between the radius of the first pressure roll 1100 and the radius of the second pressure roll 1200 was 2000 µm was manufactured.

### <Experimental Example 1- Confirmation of wrinkles and folds of the negative electrode>

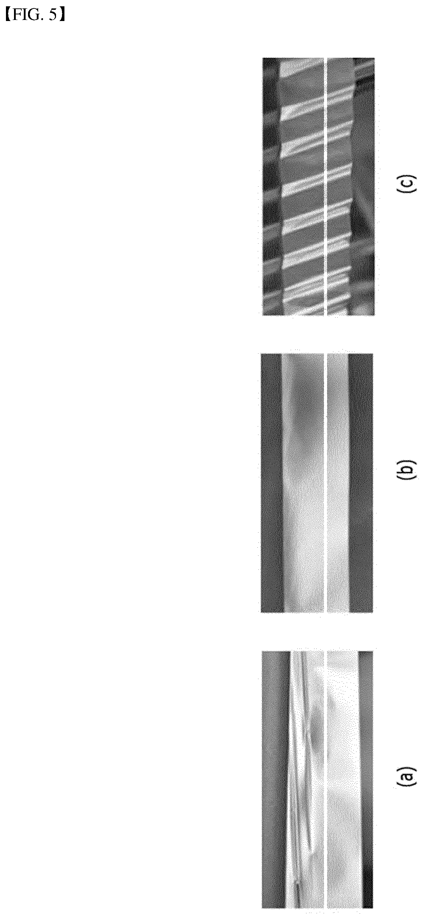

A negative electrode including a coating part in which the negative electrode active material layer was formed on the negative electrode current collector and a non-coating part in which the negative electrode active material layer was not formed were pressed with the electrode manufacturing devices of Examples 1 to 3. The results are shown in Fig. 5.

Referring to Fig. 5, it can be confirmed that the non-coating part 110 pressed by the electrode manufacturing device of Comparative Example 1 caused the generation of wrinkles. Also, it can be confirmed that the non-coating part 110 pressed by the electrode manufacturing device of Comparative Example 2 caused the generation of swelling. In particular, it can be confirmed that the degree of the generation of wrinkles in Comparative Example 2 deepened compared to Comparative Example 1. Unlike the same, it can be confirmed that wrinkles were removed from the non-coating part 110 pressed by the electrode manufacturing device of Example 1.

Thereby, in the case of the negative electrode, it can be confirmed that when the first pressure roll 1100 and the second pressure roll 1200 had a difference d1 between the radius of the first pressure roll 1100 and the radius of the second pressure roll 120 as in the electrode manufacturing device of Example 1, wrinkles of the non-coating part 110 were effectively removed.

### <Experimental Example 2- Confirmation of wrinkles and folds of the positive electrode>

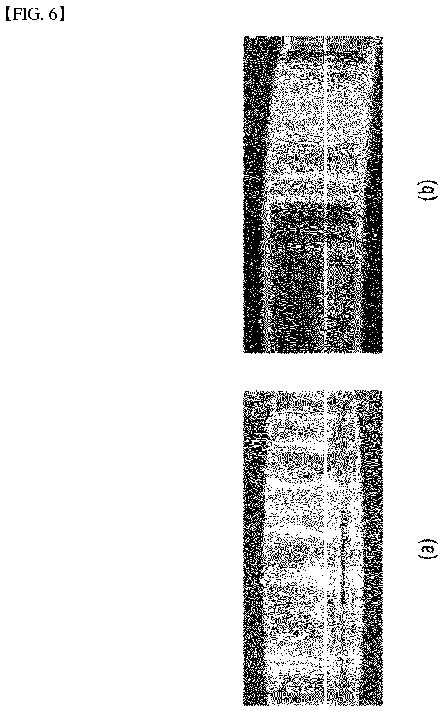

A positive electrode including a coating part in which the positive electrode active material layer was formed on the positive electrode current collector and a non-coating part in which the positive electrode active material layer was not formed was pressed with the electrode manufacturing devices of Comparative Example 1 and Example 1. The results are shown in Fig. 6.

Referring to Fig. 6, it can be confirmed that the non-coating part 110 pressed by the electrode manufacturing device of Comparative Example 1 caused the generation of folds. In addition, it can be confirmed that wrinkles are removed from the non-coating part 110 pressed by the electrode manufacturing device of Example 1.

Therefore, in the case of the positive electrode, it can be confirmed that in the electrode manufacturing device 1000, when the first pressure roll 1100 and the second pressure roll 1200 had a difference d1 between the radius of the first pressure roll 1100 and the radius of the second pressure roll 1200 as in the electrode manufacturing device of Example 1, the wrinkles of the non-coating part 110 were effectively removed.

Although preferred embodiments of the present disclosure have been described in detail above, the scope of the present disclosure is not limited thereto, and various modifications and improvements can be made by those skilled in the art using the basic concepts of the present disclosure as defined in the appended claims, which also falls within the scope of the present disclosure.

### [Description of Reference Numerals]

100: electrode
110: non-coating part
150: coating part
150s: first sliding part
1000: electrode manufacturing device
1001: first electrode manufacturing device
1002: second electrode manufacturing device
1100: first pressure roll
1100s: second sliding part
1200: second pressure roll
1500: connection part
1600: fixing part

## Claims

1. A method for applying pressure to an electrode (100) using an electrode manufacturing device (1000), wherein the electrode (100) contains a coating part (150) and a non-coating part (110), and the electrode manufacturing device (1000) comprises:
a first pressure roll (1100);
a second pressure roll (1200);
the first pressure roll (1100) being located on an extremity of the second pressure roll (1200), and
a connection part (1500) that penetrates through the center of the first pressure roll (1100) and the center of the second pressure roll (1200), respectively,
wherein a difference **d1** between a radius of the first pressure roll (1100) and a radius of the second pressure roll (1200) is equal to or smaller than a step difference d2 between the coating part (150) and the non-coating part (110),
wherein
the end of the coating part (150) includes a first sliding part (150s) whose thickness decreases in a direction toward the non-coating part (110), and
the first pressure roll (1100) includes a second sliding part (1100s) in contact with the first sliding part (150s),
wherein the first pressure roll (1100) applies pressure to the non-coating part (110) and the second pressure roll (1200) applies pressure to the coating part (150).

2. The method according to claim 1, wherein:
a difference **d1** between a radius of the first pressure roll (1100) and a radius of the second pressure roll (1200) is more than 50 µm and less than 2000 µm.

3. The method according to claim 1, wherein:
the first pressure roll (1100) extends along an end of the coating part (150), and
the first pressure roll (1100) applies pressure to ends of the non-coating part (110) and the coating part (150).

4. The method according to claim 1, wherein:
a thickness of the second sliding part (1100s) is equal to or smaller than a thickness of the first sliding part (150s).

5. The method according to claim 4, wherein:
the thickness of the second sliding part (1100s) is more than 50µm and less than 2000µm.

6. The method according to claim 1, wherein:
the first pressure roll (1100) and the second pressure roll (1200) are in contact with each other.

7. The method according to claim 6, wherein:
a surface in contact with the second pressure roll (1200) among the outer surfaces of the first pressure roll (1100) and a surface in contact with the first pressure roll (1100) among the outer surfaces of the second pressure roll (1200) are respectively coated.

8. The method according to claim 6, wherein:
the entire outer surface of the first pressure roll (1100) and the entire outer surface of the second pressure roll (1200) are respectively coated.

9. The method according to claim 6, further comprising:
at least one fixing part (1600) that penetrates through each of the first pressure roll (1100) and the second pressure roll (1200),
wherein the fixing part (1600) is spaced apart from the connection part (1500).

10. The method according to claim 1, wherein:
the first pressure roll (1100) and the second pressure roll (1200) are each composed of at least one material selected from the group consisting of metal, plastic, rubber, and silicon.

11. An electrode manufacturing device (1000) configured to apply pressure to an electrode containing:
• a coating part (150) and
• a non-coating part (110),
the electrode manufacturing device (1000) comprising:
• a first pressure roll (1100) that is configured to apply pressure to the non-coating part (110);
• a second pressure roll (1200) that is configured to apply pressure to the coating part (150); the first pressure roll (1100) being located on an extremity of the second pressure roll (1200), and
• a connection part (1500) that penetrates through the center of the first pressure roll (1100) and the center of the second pressure roll (1200), respectively,
wherein a difference **d1** between a radius of the first pressure roll (1100) and a radius of the second pressure roll (1500) is configured to be equal to or smaller than a step difference d2 between the coating part (150) and the non-coating part (110) of the electrode (100),
wherein the difference **d1** between a radius of the first pressure roll (1100) and a radius of the second pressure roll (1200) 300 µm or more 500 µm or less.

## Patentansprüche

1. Verfahren zum Ausüben eines Drucks auf eine Elektrode (100) unter Verwendung einer Elektrodenfertigungsvorrichtung (1000), wobei die Elektrode (100) einen beschichteten Teil (150) und einen nicht beschichteten Teil (110) enthält und die Elektrodenfertigungsvorrichtung (1000) umfasst:
eine erste Druckwalze (1100);
eine zweite Druckwalze (1200);
wobei die erste Druckwalze (1100) an einem äußeren Rand der zweiten Druckwalze (1200) angeordnet ist, und
einen Verbindungsteil (1500), welcher jeweils die Mitte der ersten Druckwalze (1100) und die Mitte der zweiten Druckwalze (1200) durchdringt,
wobei eine Differenz d1 zwischen einem Radius der ersten Druckwalze (1100) und einem Radius der zweiten Druckwalze (1200) gleich wie oder kleiner als eine Stufendifferenz d2 zwischen dem beschichteten Teil (150) und dem nicht beschichteten Teil (110) ist,
wobei das Ende des beschichteten Teils (150) einen ersten gleitenden Teil (150s) umfasst, dessen Dicke in einer Richtung in Richtung des nicht beschichteten Teils (110) abnimmt, und
die erste Druckwalze (1100) einen zweiten gleitenden Teil (1100s) umfasst, welcher in Kontakt mit dem ersten gleitenden Teil (150s) ist,
wobei die erste Druckwalze (1100) einen Druck auf den nicht beschichteten Teil (110) ausübt und die zweite Druckwalze (1200) einen Druck auf den beschichteten Teil (150) ausübt.

2. Verfahren nach Anspruch 1, wobei:
eine Differenz d1 zwischen einem Radius der ersten Druckwalze (1100) und einem Radius der zweiten Druckwalze (1200) mehr als 50 µm und weniger als 2000 µm ist.

3. Verfahren nach Anspruch 1, wobei:
sich die erste Druckwalze (1100) entlang eines Endes des beschichteten Teils (150) erstreckt und
die erste Druckwalze (1100) einen Druck auf Enden des nicht beschichteten Teils (110) und des beschichteten Teils (150) ausübt.

4. Verfahren nach Anspruch 1, wobei:
eine Dicke des zweiten gleitenden Teils (1100s) gleich wie oder kleiner als eine Dicke des ersten gleitenden Teils (150s) ist.

5. Verfahren nach Anspruch 4, wobei:
die Dicke des zweiten gleitenden Teils (1100s) mehr als 50 µm und weniger als 2000 µm ist.

6. Verfahren nach Anspruch 1, wobei:
die erste Druckwalze (1100) und die zweite Druckwalze (1200) in Kontakt miteinander sind.

7. Verfahren nach Anspruch 6, wobei:
eine Fläche, welche in Kontakt mit der zweiten Druckwalze (1200) ist, unter den äußeren Flächen der ersten Druckwalze (1100) und eine Fläche, welche in Kontakt mit der ersten Druckwalze (1100) ist, unter den äußeren Flächen der zweiten Druckwalze (1200) jeweils beschichtet sind.

8. Verfahren nach Anspruch 6, wobei:
die gesamte äußere Fläche der ersten Druckwalze (1100) und die gesamte äußere Fläche der zweiten Druckwalze (1200) jeweils beschichtet sind.

9. Verfahren nach Anspruch 6, ferner umfassend:
wenigstens einen Fixierungsteil (1600), welcher jede der ersten Druckwalze (1100) und der zweiten Druckwalze (1200) durchdringt,
wobei der Fixierungsteil (1600) von dem Verbindungsteil (1500) beabstandet ist.

10. Verfahren nach Anspruch 1, wobei:
die erste Druckwalze (1100) und die zweite Druckwalze (1200) jeweils aus wenigstens einem Material zusammengesetzt sind, welches ausgewählt ist aus der Gruppe, bestehend aus Metall, Kunststoff, Gummi und Silikon.

11. Elektrodenfertigungsvorrichtung (1000), welche derart konfiguriert ist, dass sie einen Druck auf eine Elektrode ausübt, welche enthält:
• einen beschichteten Teil (150) und
• einen nicht beschichteten Teil (110),
wobei die Elektrodenfertigungsvorrichtung (1000) umfasst:
• eine erste Druckwalze (1100), welche derart konfiguriert ist, dass sie einen Druck auf den nicht beschichteten Teil (110) ausübt;
• eine zweite Druckwalze (1200), welche derart konfiguriert ist, dass sie einen Druck auf den beschichteten Teil (150) ausübt; wobei die erste Druckwalze (1100) an einem äußeren Rand der zweiten Druckwalze (1200) angeordnet ist, und
• einen Verbindungsteil (1500), welcher jeweils die Mitte der ersten Druckwalze (1100) und die Mitte der zweiten Druckwalze (1200) durchdringt,
wobei eine Differenz d1 zwischen einem Radius der ersten Druckwalze (1100) und einem Radius der zweiten Druckwalze (1500) derart konfiguriert ist, dass sie gleich wie oder kleiner als eine Stufendifferenz d2 zwischen dem beschichteten Teil (150) und dem nicht beschichteten Teil (110) der Elektrode (100) ist,
wobei die Differenz d1 zwischen einem Radius der ersten Druckwalze (1100) und einem Radius der zweiten Druckwalze (1200) 300 µm oder mehr und 500 µm oder weniger ist.

## Revendications

1. Procédé pour appliquer une pression sur une électrode (100) à l'aide d'un dispositif de fabrication d'électrode (1000), dans lequel l'électrode (100) contient une partie avec revêtement (150) et une partie sans revêtement (110), et le dispositif de fabrication d'électrode (1000) comprend :
un premier rouleau de pression (1100) ;
un second rouleau de pression (1200) ;
le premier rouleau de pression (1100) étant situé sur une extrémité du second rouleau de pression (1200), et
une partie de liaison (1500) qui passe à travers le centre du premier rouleau de pression (1100) et le centre du second rouleau de pression (1200), respectivement,
dans lequel une différence **d1** entre un rayon du premier rouleau de pression (1100) et un rayon du second rouleau de pression (1200) est égale ou inférieure à une différence de niveau **d2** entre la partie avec revêtement (150) et la partie sans revêtement (110),
dans lequel l'extrémité de la partie avec revêtement (150) comprend une première partie coulissante (150s) dont l'épaisseur diminue dans une direction vers la partie sans revêtement (110), et
le premier rouleau de pression (1100) comprend une seconde partie coulissante (1100s) en contact avec la première partie coulissante (150s),
dans lequel le premier rouleau de pression (1100) applique une pression sur la partie sans revêtement (110) et le second rouleau de pression (1200) applique une pression sur la partie avec revêtement (150).

2. Procédé selon la revendication 1, dans lequel :
une différence **d1** entre un rayon du premier rouleau de pression (1100) et un rayon du second rouleau de pression (1200) est supérieure à 50 µm et inférieure à 2000 µm.

3. Procédé selon la revendication 1, dans lequel :
le premier rouleau de pression (1100) s'étend le long d'une extrémité de la partie avec revêtement (150), et
le premier rouleau de pression (1100) applique une pression sur les extrémités de la partie sans revêtement (110) et de la partie avec revêtement (150).

4. Procédé selon la revendication 1, dans lequel :
une épaisseur de la seconde partie coulissante (1100s) est égale ou inférieure à une épaisseur de la première partie coulissante (150s).

5. Procédé selon la revendication 4, dans lequel :
l'épaisseur de la seconde partie coulissante (1100s) est supérieure à 50 µm et inférieure à 2000 µm.

6. Procédé selon la revendication 1, dans lequel :
le premier rouleau de pression (1100) et le second rouleau de pression (1200) sont en contact l'un avec l'autre.

7. Procédé selon la revendication 6, dans lequel :
une surface en contact avec le second rouleau de pression (1200) parmi les surfaces extérieures du premier rouleau de pression (1100) et une surface en contact avec le premier rouleau de pression (1100) parmi les surfaces extérieures du second rouleau de pression (1200) sont respectivement revêtues.

8. Procédé selon la revendication 6, dans lequel :
la surface extérieure entière du premier rouleau de pression (1100) et la surface extérieure entière du second rouleau de pression (1200) sont respectivement revêtues.

9. Procédé selon la revendication 6, comprenant en outre :
au moins une partie de fixation (1600) qui passe à travers chacun du premier rouleau de pression (1100) et du second rouleau de pression (1200),
dans lequel la partie de fixation (1600) est espacée de la partie de liaison (1500).

10. Procédé selon la revendication 1, dans lequel :
le premier rouleau de pression (1100) et le second rouleau de pression (1200) sont chacun composés d'au moins un matériau sélectionné dans le groupe constitué de métal, de plastique, de caoutchouc et de silicium.

11. Dispositif de fabrication d'électrode (1000) configuré pour appliquer une pression sur une électrode contenant :
• une partie avec revêtement (150) et
• une partie sans revêtement (110),
le dispositif de fabrication d'électrode (1000) comprenant :
• un premier rouleau de pression (1100) qui est configuré pour appliquer une pression sur la partie sans revêtement (110) ;
• un second rouleau de pression (1200) qui est configuré pour appliquer une pression sur la partie avec revêtement (150) ; le premier rouleau de pression (1100) étant situé sur une extrémité du second rouleau de pression (1200), et
• une partie de liaison (1500) qui passe à travers le centre du premier rouleau de pression (1100) et le centre du second rouleau de pression (1200), respectivement,
dans lequel une différence **d1** entre un rayon du premier rouleau de pression (1100) et un rayon du second rouleau de pression (1500) est configurée pour être égale ou inférieure à une différence de niveau **d2** entre la partie avec revêtement (150) et la partie sans revêtement (110) de l'électrode (100),
dans lequel la différence **d1** entre un rayon du premier rouleau de pression (1100) et un rayon du second rouleau de pression (1200) est de 300 µm ou plus et de 500 µm ou moins.
